## Europäisches Patentamt

## European Patent Office

## Office européen des brevets

(19)

(11) Veröffentlichungsnummer: **0 252 183**
**B1**

(12) **EUROPÄISCHE PATENTSCHRIFT**

(45) Veröffentlichungstag der Patentschrift:
**24.05.89**

(21) Anmeldenummer: **86114589.4**

(22) Anmeldetag: **21.10.86**

(51) Int. Cl.⁴: **B60K 17/34**, B60K 17/35,
F16H 1/455

(54) Allrad-Sperrsystem im Antriebsstrang eines Kraftfahrzeuges.

(30) Priorität: **14.05.86 DE 3616236**

(43) Veröffentlichungstag der Anmeldung:
**13.01.88 Patentblatt 88/2**

(45) Bekanntmachung des Hinweises auf die Patenterteilung:
**24.05.89 Patentblatt 89/21**

(84) Benannte Vertragsstaaten:
**AT BE CH DE ES FR GB IT LI NL SE**

(56) Entgegenhaltungen:
**DE-A- 3 218 830**
**DE-A- 3 223 836**
**DE-A- 3 611 968**
**DE-C- 3 507 490**

(73) Patentinhaber: **Dr.Ing.h.c. F. Porsche Aktiengesellschaft, Porschestrasse 42, D-7000 Stuttgart 40(DE)**

(72) Erfinder: **Gausrab, Klaus, Dipl.-Ing., Knoedlergasse 4, D-7392 Ostfildern 2(DE)**
Erfinder: **Müller, Robert, Badstrasse 21, D-7251 Mönsheim(DE)**
Erfinder: **Pitsch, Hermann, Dipl.-Ing. FH, Tannweg 17, D-7251 Wimsheim(DE)**

ACTORUM AG

**Beschreibung**

Die Erfindung betrifft ein Allrad-Sperrsystem nach dem Oberbegriff des Anspruchs 1.

Ein derartiges Sperrsystem ist in DE-PS 35 07 490 beschrieben. Das dabei verwendete Planetengetriebe besteht aus einem mit der antreibenden Achse verbundenen Eingangssonnenrad, einem koaxial daneben gelagerten und mit der zu treibenden Achse verbundenen Ausgangssonnenrad etwas größerer Zähnezahl sowie aus den mit beiden Sonnenrädern zugleich in Eingriff stehenden Planetenrädern, die an einem Planetenträger gelagert sind. Am Planetenträger sind Lagerbolzen angebracht, auf denen als Bremsglieder Bremsbacken so gelagert sind, daß sie als Fliehgewichte wirksam werden, wenn sich der Planetenträger dreht und sich mit ihren Bremsbelägen an eine als Gegenbremsglied dienende, feststehende Bremstrommel anlegen. Da das Ausgangssonnenrad einen oder zwei Zähne weniger hat als das Eingangssonnenrad, dreht sich der Planetenträger, der eine Zahnradübersetzung von z. B. 16 : 1 zu den Sonnenrädern hat, ständig, auch wenn die Vorderachse und Hinterachse synchron laufen, so daß das Sperrsystem dauernd eine, wenn auch geringe Verlustleistung erbringt. Außerdem müssen, um einen Synchronlauf von Vorderachse und Hinterachse zu erzielen, die zugehörigen Winkeltriebe im umgekehrten Verhältnis der Durchtriebsübersetzung unterschiedlich sein. Hat bei einem Kraftfahrzeug mit Frontantrieb das Eingangssonnenrad eine Zähnezahl von z = 32, das Ausgangssonnenrad z = 30 Zähne, so ist die Winkeltriebübersetzung zur Vorderachse 8 : 32, zur Hinterachse mit 8 : 30 auszulegen, um die Durchtriebsübersetzung auszugleichen.

Die Aufgabe der Erfindung besteht darin, ein solches Sperrsystem so weiterzubilden, daß ein Synchronlauf von Vorderachse und Hinterachse, auch bei gleicher Winkeltriebübersetzung möglich wird und bei schlupffreiem Synchronlauf ein Leistungsverlust im Sperrsystem vermieden wird.

Zur Lösung dieser Aufgabe dienen die kennzeichnenden Merkmale des Anspruchs 1. Wenn ein mit dem Planetenträger verbundenes Bremsglied mit einem Gegenbremsglied zusammenwirkt, das drehfest mit dem Antriebsstrang Vorderachse-Hinterachse verbunden ist, läuft bei deren Synchronlauf das ganze Sperrsystem mit um, ohne daß der Planetenträger hierbei eine Relativdrehung ausführt. Infolgedessen entsteht in diesem Fall auch kein Bremsmoment und kein Leistungsverlust. Ein bremsendes Sperrmoment wird erst erzeugt, wenn die Drehzahlen von Vorderachse und Hinterachse unterschiedlich sind, da nur dann eine Relativdrehung zwischen dem Bremsglied und dem Gegenbremsglied erzeugt wird. Aus diesem Grunde können auch die Winkeltriebübersetzungen zur Vorderachse und Hinterachse gleich groß bemessen sein.

Ein Ausführungsbeispiel der Erfindung ist in der Zeichnung dargestellt und wird nachfolgend erläutert.

Es zeigt

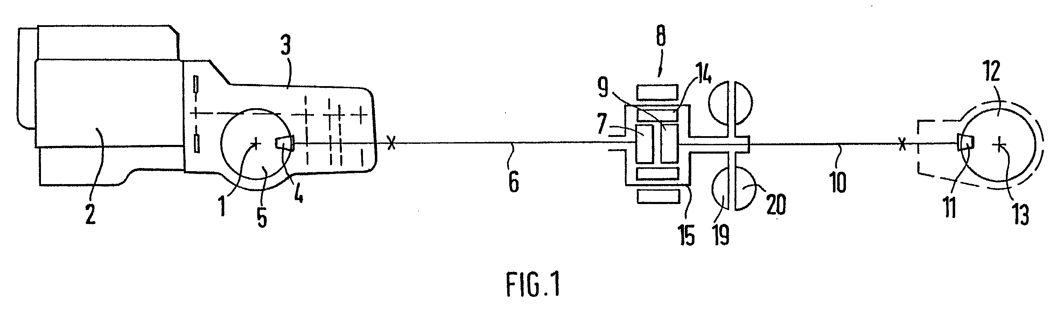

Fig. 1 Allrad-Antriebsschema eines Kraftfahrzeuges,

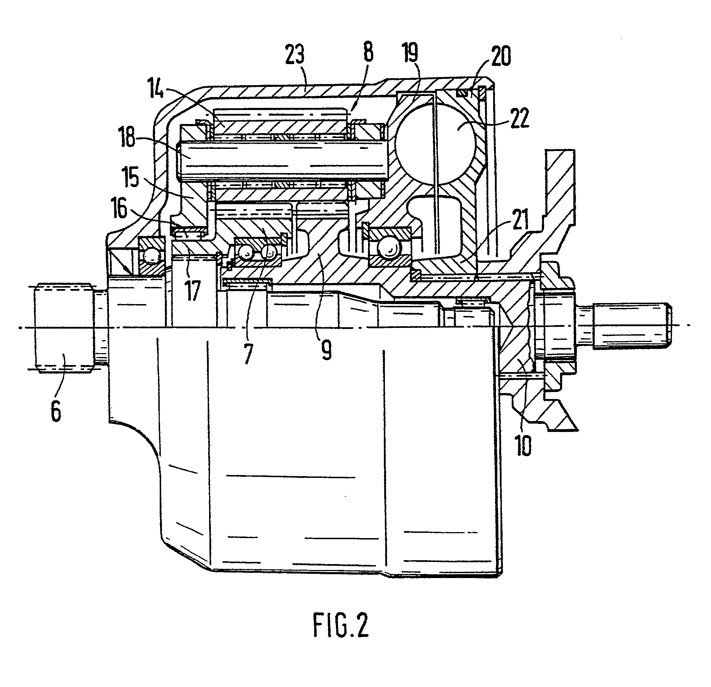

Fig. 2 Längsschnitt durch das Allrad-Sperrsystem.

Eine nahe der Vorderachse 1 an einem Kraftfahrzeug angeordneter Antriebsmotor 2 treibt mit einem an ihm angebauten Gangschaltgetriebe 3 über ein Kegelrad 4 und ein Tellerrad 5 die Vorderachse 1 an. Von dem Kegelrad 4 geht eine Antriebswelle 6 zu einem Eingangssonnenrad 7 eines Planetengetriebes 8. Koaxial zu dem Eingangssonnenrad 7 ist neben ihm ein Ausgangssonnenrad 9 gelagert, von dem eine Abtriebswelle 10 zu einem Kegelrad 11 führt, das ein Tellerrad 12 der Hinterachse 13 antreibt.

Mit dem Eingangssonnenrad 7 und dem Ausgangssonnenrad 9 gemeinsam stehen Planetenräder 14 in Eingriff, die an einem Planetenträger 15 gelagert sind, der seinerseits mit einem Nadellager 16 auf einem Hohlzapfen 17 des auf der Antriebswelle 6 drehfesten Eingangssonnenrads 7 gelagert ist. Zur Lagerung der Planetenräder 14 sind in dem Planetenträger 15 Lagerbolzen 18 befestigt, an deren anderen Enden ein Bremsglied 19 befestigt ist, das als eine beschaufelte Halbschale einer hydrodynamischen Kupplung ausgebildet ist.

Die andere beschaufelte Halbschale wirkt als Gegenbremsglied 20 und ist mit einer Nabe 21 auf der Abtriebswelle 10 mittels einer Kerbzahnverbindung befestigt. Beide Halbschalen bilden zusammen einen torusförmigen Strömungsraum 22, der mit Hydraulikflüssigkeit gefüllt ist. Das Gegenbremsglied 20 ist in einem zylindrischen Gehäuse 23 zentriert und abgedichtet, das auch das Bremsglied 19 und das Planetengetriebe 8 umschließt und auf der Antriebswelle 6 gelagert und abgedichtet ist.

Das Eingangssonnenrad hat eine Zähnezahl z = 32, das Ausgangssonnenrad 9 eine Zähnezahl z = 30, so daß die Übersetzung für den Direktdurchtrieb 16:15 wird. Die Zahnradübersetzung zum Planetenträger 15 beträgt 16:1. Tritt eine Drehzahldifferenz zwischen der Vorderachse 1 und somit eine gleich große Drehzahldifferenz zwischen der Antriebswelle 6 und der Abtriebswelle 10 auf, so dreht der Planetenträger 15 mit dem 16fachen dieser Drehzahldifferenz. Durch die Relativdrehung des Bremsgliedes 19 zum Gegenbremsglied 20 wird ein der Drehzahldifferenz entsprechendes Bremsmoment aufgebaut, das einen Synchronlauf von Vorderachse 1 und Hinterachse 13 bewirkt.

Infolge des progressiv ansteigenden, hydrodynamischen Bremsmoments wird das Sperrmoment bei kleinen Schlupfwerten klein gehalten. Das Kraftfahrzeug ist gut lenkbar und ein ABS-System ist voll funktionsfähig. Bei großen Schlupfwerten, wie sie z.B. auftreten, wenn die Räder der Vorderachse 1 auf Eis durchrutschen, die Räder der Hinterachse 13 auf griffigem Asphalt stehen, steigt das Sperrmoment steil an und ermöglicht auch in diesem Extremfall ein problemloses Anfahren.

Anstelle der als Bremse wirkenden hydrodynamischen Kupplung können das Bremsglied (19) und Gegenbremsglied (20) zusammen auch eine Fliehkraftbremse, Bandbremse oder elektrische Wirbelstrombremse bilden.

## Patentansprüche

1. Allradsperrsystem in Antriebsstrang Vorderachse-Hinterachse eines Kraftfahrzeuges, mit einem den direkten Durchtrieb vermittelnden Planetengetriebe (8) und einer an dessen Planetenträger (15) angreifenden Bremsvorrichtung (19, 20), wobei die Zahnradübersetzung für den Direktdurchtrieb geringfügig von 1:1 abweicht, die Zahnradübersetzung zur Bremsvorrichtung aber wesentlich höher ist, dadurch gekennzeichnet, daß die Bremsvorrichtung aus einem mit dem Planetenträger (15) drehfest verbundenen Bremsglied (19) und einem mit ihm zusammenwirkenden Gegenbremsglied (20) besteht, das mit einer Abtriebswelle (10) zur Hinterachse (13) oder Vorderachse (1) drehfest verbunden ist.

2. Sperrsystem nach Anspruch 1, dadurch gekennzeichnet, daß das Planetengetriebe (8) aus einem mit einer Antriebswelle (6) drehfest verbundenen Eingangssonnenrad (7), einem koaxial daneben gelagerten und mit der Abtriebswelle (10) verbundenen Ausgangssonnenrad (10) etwas größerer Zähnezahl, sowie aus den mit beiden Sonnenrädern (7, 9) gemeinsam in Eingriff stehenden, an dem Planetenträger (15) gelagerten Planetenrädern (14) zusammengesetzt ist.

3. Sperrsystem nach Anspruch 1, dadurch gekennzeichnet, daß das Bremsglied (19) und Gegenbremsglied (20) zusammen eine hydrodynamische Kupplung bilden.

4. Sperrsystem nach Anspruch 3, dadurch gekennzeichnet, daß das Bremsglied (19) und das Gegenbremsglied (20) als beschaufelte Halbschalen ausgebildet sind, die einen ölgefüllten, torusförmigen Strömungsraum (22) umschließen.

5. Sperrsytem nach Anspruch 4, dadurch gekennzeichnet, daß das Gegenbremsglied (20) in einem mit ihm umlaufenden, zylindrischen Gehäuse (23) zentriert und abgedichtet befestigt, das das Sperrsystem als ganzes umschließt und auf der Antriebswelle (6) oder Abtriebswelle (10) gelagert ist.

6. Sperrsystem nach Anspruch 1, dadurch gekennzeichnet, daß das Bremsglied (19) und Gegenbremsglied (20) zusammen eine Fliehkraftbremse oder Bandbremse bilden.

7. Sperrsystem nach Anspruch 1, dadurch gekennzeichnet, daß das Bremsglied (19) und Gegenbremsglied (20) zusammen eine elektrische Wirbelstrombremse bilden.

## Claims

1. A four-wheel-drive locking system in the front axle/rear axle drive train of a motor vehicle, having a planetary gearing (8) imparting direct throughdrive, and a braking device (19, 20) engaging the pinion cage (15) of said planetary gearing (8), wherein the gearwheel transmission for the direct through-dirve deviates slightly from 1:1, but the gearwheel transmission to the braking device is substantially higher, characterised in that the braking device comprises a braking member (19) non-rotatably connected to the pinion cage (15), and a counter-braking member (20) co-operating with said braking member (19) and being non-rotatably connected via a driven shaft (10) to the rear axle (13) or the front axle (1).

2. A locking system according to claim 1, characterised in that the planetary gearing (8) is an assembly of input sun wheel (7) non-rotatably connected to a drive shaft (6), an output sun wheel (10)** which is mounted coaxially adjacent the input sun wheel (7), is connected to a driven shaft (10) and has a slightly larger number of teeth, and also the planet wheels (14) in joint engagement with the two sun wheels (7, 9) and being mounted on the pinion cage (15).

3. A locking system according to claim 1, characterised in that the braking member (19) and counter-braking member (20) together form a hydrodynamic coupling.

4. A locking system according to claim 3, characterised in that the braking member (19) and the counter-braking member (20) are constructed as bladed half-shells which enclose an oil-filled torus-shaped flow space (22).

5. A locking system according to claim 4, characterised in that the counter-braking member (20) is secured in a centred and tight-sealed manner in a cylindrical housing (23) which rotates therewith and which encloses the locking system in its entirety and which is mounted on the drive shaft (6) or driven shaft (10).

6. A locking system according to claim 1, characterised in that the braking member (19) and counter-baking member 820) together form a centrifugal-force brake or band brake.

7. A locking system according to claim 1, characterised in that the braking member (91) and counter-braking member (20) together form an electrical eddy-current brake.

## Revendications

1. Système de verrouillage des quatre roues dans l'ensemble de transmission essieu avant-essieu arrière d'un véhicule à moteur, comportant un engrenage planétaire (8) assurant la transmission directe et un dispositif de freinage (19, 20) agissant sur le porte-satellites (15) de cet engrenage, la multiplication pour la transmission directe s'écartant peu de 1:1, le rapport de multiplication pour le dispositif de freinage étant, par contre, sensiblement plus élevé, caractérisé en ce que le dispositif de freinage est constitué par un élément de freinage (19) relié solidaire en rotation, avec le porte-satellites (15) et par un élément de freinage opposé (20) coopérant avec le précédent, lequel est relié, solidaire en rotation, avec un arbre de sortie (10) allant à l'essieu arrière (13) ou à l'essieu avant (1).

2. Systüme de verrouillage selon la revendication 1, caractérisé en ce que l'engrenage planétaire (8) est constitué par une roue planétaire d'entrée (7), une roue planétaire de sortie (10) montée coaxialement à côté et ayant un nombre de dents légèrement plus grand, ainsi que par les roues satellites (14) engrenant ensemble avec les roues planétaires (7, 9) et montées sur le porte-satellites (15).

3. Système de verrouillage selon la revendication 1, caractérisé en ce que l'élément de freinage (19) et l'élémet de freinage opposé (20) constituent ensemble un accouplement hydrodynamique.

4. Système de verrouillage selon la revendication 3, caractérisé en ce que l'élément de freinage (19) et l'élément de freinage opposé (20) sont réalisés sous forme de demi-coquilles munies de palettes qui délimitent un volume d'écoulement (22) de forme torique, rempli d'huile.

5. Système de verrouillage selon la revendication 4, caractérisé en ce que l'élément de freinage opposé (20) est fixé dans un carter cylindrique (23) dans lequel il est centré et rendu étanche, qui tourne avec lui et délimite le système de verrouillage dans sa totalité et qui est monté sur l'arbre de transmission (6) ou sur l'arbre de sortie (10).

6. Système de verrouillage selon la revendication 1, caractérisé en ce que l'élément de freinage (19) et l'élément de freinage opposé (20) forment ensemble un frein centrifuge ou un frein à bande.

7. Système de verrouillage selon la revendication 1, caractérisé en ce que l'élément de freinage (19) et l'élément de freinage opposé (20) forment ensemble un frein éléctrique à courant de Foucault.

FIG.1

FIG.2